# EUROPEAN PATENT APPLICATION

(11) **EP 4 456 217 A2**
(43) Date of publication of application: **30.10.2024**
(21) Application number: 24170841.1
(22) Date of filing: 17.04.2024
(51) Int. Cl.: H01M 8/2465

(54) **ELECTRICAL CONNECTOR SYSTEMS AND METHODS FOR CONNECTING TO A FUEL CELL STACK**

(30) Priority: 18.04.2023 US 202318302125
(71) Applicant: Plug Power, Inc., Latham, NY 12110 (US)
(72) Inventor: CACIOPPO, Michael, Latham, New York, 12110 (US); ELDER, Charles Russell, Latham, New York, 12110 (US); VIGGIANO, John, Latham, New York, 12110 (US)
(74) Representative: Buzzi, Notaro & Antonielli d'Oulx S.p.A.

(57) **Abstract**

A connector system is provided for facilitating electrically connecting to a fuel cell stack. The connector system includes a receptacle within the fuel cell stack, a circuit board, and a connector electrically connected to and extending from the circuit board. The receptacle is configured to facilitate electrically connecting to the fuel cell stack, and the connector is receivable within the receptacle for electrically connecting the circuit board to the fuel cell stack. The connector is elastically deformable to facilitate operative positioning of the connector within the receptacle, and to facilitate an interference fit of the connector within the receptacle against a surface defining, at least in part, the receptacle to secure the connector within the receptacle, with the connector electrically connected to a fuel cell plate of the fuel cell stack.

## Description

### CROSS-REFERENCE TO RELATED APPLICATIONS

This application is related to U.S. Patent Application Serial No. 17/821,560, filed August 23, 2022, entitled "FUEL CELL SYSTEM", the entirety of which is hereby incorporated herein by reference.

This application is also related to U.S. Patent Application Serial No. 17/817,400, filed August 4, 2022 , entitled "FUEL CELL INFORMATION MONITOR AND DATA TRANSFER", the entirety of which is hereby incorporated herein by reference.

In addition, this application is related to U.S. Patent Application Serial No. 17/663,097, filed May 12, 2022, entitled "INTEGRATED CIRCUIT FOR DIAGNOSTICS", the entirety of which is hereby incorporated herein by reference.

### TECHNICAL FIELD

The present invention relates, generally, to systems and methods for connecting to a fuel cell stack, and more particularly, to electrical connector systems and methods for connecting to a fuel cell stack, such as for monitoring one or more fuel cells of the fuel cell stack for variations in electrical output and functioning of the one or more fuel cells.

### BACKGROUND

Fuel cells electrochemically convert fuels and oxidants to electricity and heat and can be categorized according to the type of electrolyte (e.g., solid oxide, molten carbonate, alkaline, phosphoric acid or solid polymer) used to accommodate ion transfer during operation. Moreover, fuel cell assemblies can be employed in many (e.g., automotive to aerospace to industrial to residential) environments, for multiple applications.

A Proton Exchange Membrane (hereinafter "PEM") fuel cell converts the chemical energy of fuels, such as hydrogen, and oxidants, such as air, directly into electrical energy. The PEM is a sold polymer electrolyte that permits the passage of protons (i.e., H+ ions) from the "anode" side of the fuel cell to the "cathode" side of the fuel cell while preventing passage therethrough of reactant fluids (e.g., hydrogen and air gases). The Membrane Electrode Assembly (hereinafter "MEA") is placed between two electrically conductive plates, each of which has a flow passage to direct the fuel to the anode side and oxidant to the cathode side of the PEM.

Two or more fuel cells may be connected together to increase the overall power output of the assembly. Generally, the cells are connected in series, wherein one side of a plate serves as an anode plate for one cell and the other side of the plate is the cathode plate for the adjacent cell. These are commonly referred to as bipolar plates (hereinafter "BPP"). Alternately, the anode plate of one cell is electrically connected to the separate cathode plate of an adjacent cell. Commonly these two plates are connected back to back and are often bonded together (e.g., bonded by adhesive, weld, or polymer). This bonded pair becomes as one, also commonly called a bipolar plate, since anode and cathode plates represent the positive and negative poles, electrically. Such a series of connected multiple fuel cells is referred to as a fuel cell stack. The stack typically includes means for directing the fuel and the oxidant to the anode and cathode flow field channels, respectively. The stack usually includes a means for directing a coolant fluid to interior channels within the stack to absorb heat generated by the exothermic reaction of hydrogen and oxygen within the fuel cells. The stack generally includes means for exhausting the excess fuel and oxidant gases, as well as product water.

The stack also includes an endplate, insulators, membrane electrode assemblies, gaskets, separator plates, electrical connectors and collector plates, among other components, that are integrated together to form the working stack designed to produce electricity. The different plates may be abutted against each other and connected to each other to facilitate the performance of particular functions.

As indicated, a fuel cell stack includes multiple connected fuel cells. Individual cell voltage monitoring is critical for system control and durability. For example, a cell with low performance can cause numerous failure mechanisms if undetected. Large stacks of fuel cells may sometimes include hundreds of cells, and cell voltage of such cells is currently detected with individual electrical wires where voltage signals are multiplexed through integrated circuits. Managing these separate electrical wires and their connections is tedious during an assembly of the multiple fuel cells into a fuel cell stack, and there are significant voltage differentials that must be managed inside the electronics. The assembly of this system of cell voltage monitors can significantly increase build time and cost of a fuel cell stack.

### SUMMARY

The present invention provides, in one aspect, a connector system for facilitating electrically connecting to a fuel cell stack. The connector system includes a receptacle within the fuel cell stack, a circuit board, and a connector electrically connected to and extending from the circuit board. The receptacle is configured to facilitate electrically connecting to the fuel cell stack, and the connector is receivable within the receptacle for electrically connecting the circuit board to the fuel cell stack. The connector is elastically deformable to facilitate operative positioning of the connector within the receptacle, and facilitate an interference fit of the connector within the receptacle against a surface defining, at least in part, the receptacle to secure the connector within the receptacle, with the connector electrically connected to a fuel cell plate of the fuel cell stack.

The present invention provides, in another aspect, a method for electrically connecting to a fuel cell stack. The method includes obtaining the fuel cell stack, the fuel cell stack having a receptacle at an edge of the fuel cell stack configured to facilitate electrically connecting to the fuel cell stack. The method further includes providing a circuit board with a connector electrically connected to and extending from the circuit board. The connector is receivable within the receptacle for electrically connecting the circuit board to the fuel cell stack, and the connector is elastically deformable to facilitate operative positioning of the connector within the receptacle, and to facilitate an interference fit of the connector within the receptacle against a surface defining, at least in part, the receptacle. The method further includes operatively positioning the connector within the receptacle by elastically deforming the connector with insertion of the connector into the receptacle. The elastically deforming facilitates interference fitting of the connector within the receptacle against the surface defining, at least in part, the receptacle to secure the connector within the receptacle, with the connector electrically connected to the fuel cell plate of the fuel cell stack.

The present invention provides, in a further aspect, a fuel cell system which includes a fuel cell stack with a receptacle at an edge of the fuel cell stack, a circuit board, and a connector electrically connected to and extending from the circuit board. The receptacle is configured to facilitate electrically connecting to the fuel cell stack, and the connector is operatively positioned within the receptacle and secured in operative position via an interference fit of the connector within the receptacle against a surface defining, at least in part, the receptacle, with the connector electrically connected to a fuel cell plate of the fuel cell stack.

### BRIEF DESCRIPTION

The subject matter which is regarded as the invention is particularly pointed out and distinctly claimed in the claims at the conclusion of the specification. The foregoing and other features and advantages of the invention will be readily understood from the following detailed description of the preferred embodiments taken in conjunction with the accompanying drawings in which:
FIG. 1 is a block diagram of one embodiment of a fuel cell system, in accordance with one or more aspects the invention;
FIG. 2 is a perspective view of one embodiment of a portion of a fuel cell of the fuel cell system of FIG. 1;
FIG. 3 is a block diagram view of a voltage sensor connected to opposing bipolar plates of the fuel cell system of FIG. 1;
FIG. 4 is a side cross-sectional view of a connector being received in a receptacle of a fuel cell plate of the system of FIG. 3;
FIG. 5 is a top view of the connector being received in the receptacle of the fuel cell of FIG. 4;
FIG. 6A is a plan view of a further embodiment of a connector and receptacle of an electrical connector system, with the connector being operatively inserted into the receptacle, in accordance with one or more aspects of the present invention;
FIG. 6B is a plan view of the connector and receptacle of FIG. 6A, with the connector shown operatively positioned within the receptacle, with an interference fit of the connector within the receptacle against one or more surfaces defining, at least in part, the receptacle, in accordance with one or more aspects of the present invention;
FIG. 6C depicts further details of one embodiment of receptacles within a fuel cell stack for an electrical connector system, such as partially depicted in FIGS. 6A-6B, in accordance with one or more aspects of the present invention;

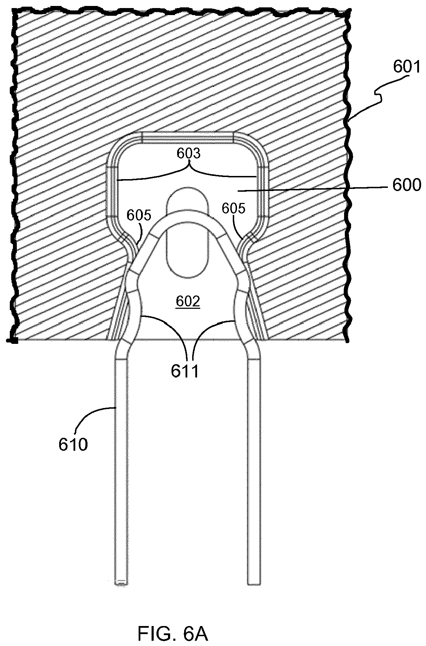

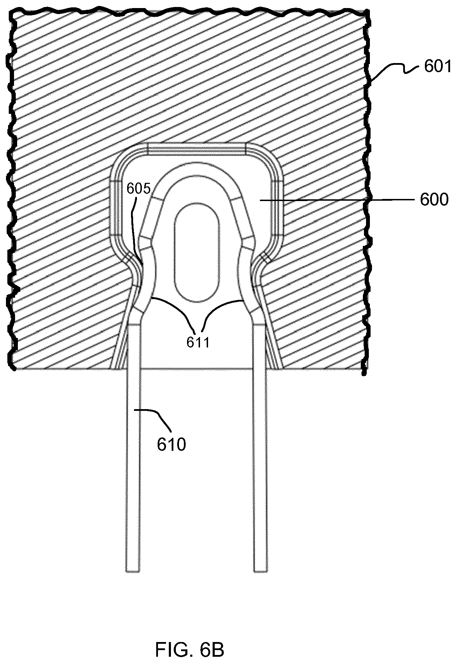

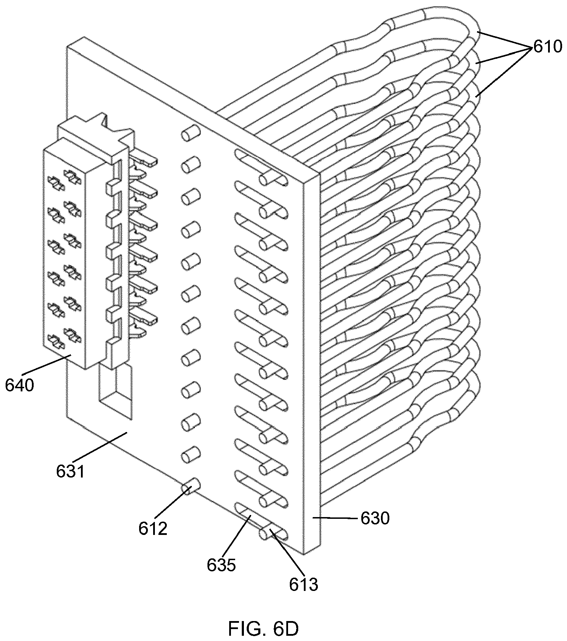

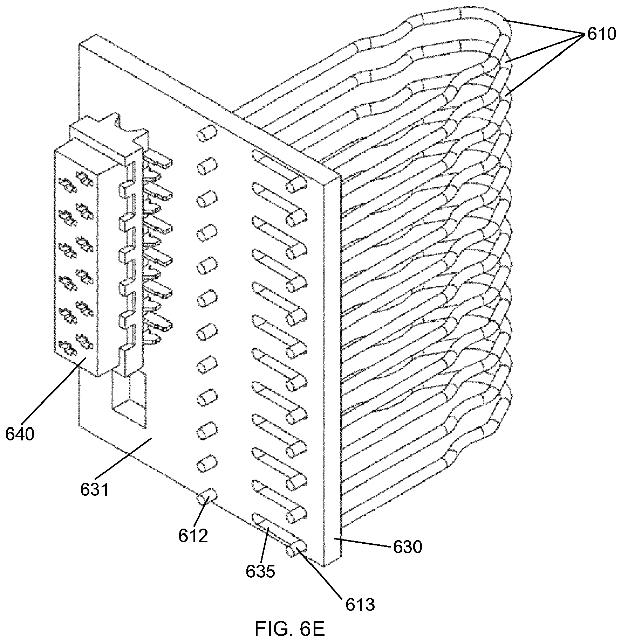

FIGS. 6D-6E depict further details of one embodiment of an electrical connector system, which includes a plurality of connectors, such as the connector of FIGS. 6A-6B, electrically connected to and extending from a circuit board, with each connector being shown partially compressed together in FIG. 6D, as occurring when positioned operatively within the respective receptacle, and with the connectors shown in free-state in FIG. 6E, where the ends of the connectors within the respective circuit board slots are shown further from the respective fixed ends of the connectors, in accordance with one or more aspects of the present invention;
FIG. 6F depicts one embodiment of a plurality of circuit boards with connectors of FIGS. 6A-6B as well as respective flex cables extending from the circuit boards to connect to, for instance, a monitor or control for monitoring one or more fuel cell voltages of the fuel cell stack, in accordance with one or more aspects of the present invention;
FIG. 6G is a top plan view of one embodiment of a fuel cell plate of a fuel cell stack with edge receptacles of a connector system, in accordance with one or more aspects of the present invention;
FIGS. 7A-7D depict another embodiment of a connector system for facilitating electrically connecting to a fuel cell stack, in accordance with one or more aspects of the present invention;
FIGS. 8A-8D depict a further embodiment of a connector system for facilitating electrically connecting to a fuel cell stack, in accordance with one or more aspects of the present invention; and
FIGS. 9A-9D depict still another embodiment of a connector system for facilitating electrically connecting to a fuel cell stack, in accordance with one or more aspects of the present invention.

### DETAILED DESCRIPTION

The accompanying figures, which are incorporated in and form a part of this specification, further illustrate the present invention and, together with this detailed description of the invention, serve to explain aspects of the present invention. Note in this regard that descriptions of well-known systems, processing techniques, etc., are omitted so as to not unnecessarily obscure the invention in detail. It should be understood, however, that the detailed description and this specific example(s), while indicating aspects of the invention, are given by way of illustration only, and not limitation. Various substitutions, modifications, additions, and/or other arrangements, within the spirit or scope of the underlying inventive concepts will be apparent to those skilled in the art from this disclosure. Note further that numerous inventive aspects or features are disclosed herein, and unless inconsistent, each disclosed aspect or feature is combinable with any other disclosed aspect or feature as desired for a particular application of the concepts disclosed.

The present invention is discussed herein in detail in terms of various exemplary embodiments with reference to the accompanying drawings. In the following detailed description, numerous specific details are set forth in order to provide a thorough understanding of the present invention. It will be obvious, however, to those skilled in the art that the present invention may be practiced without one or more of these specific details. In other instances, well-known structures are not shown in detail in order to avoid unnecessary obscuring of the present invention.

The implementations described below are exemplary implementations provided to enable persons skilled in the art to make or use the embodiments of the disclosure and are not intended to limit the scope of the disclosure, which is defined by the claims. As used herein, the word "exemplary" or "illustrative" means "serving as an example, instance, or illustration." Any implementation described herein as "exemplary" or "illustrative" is not necessarily to be construed as preferred or advantageous over other implementations.

Furthermore, there is no intention to be bound by any expressed or implied theory presented in the preceding technical field, background, summary or the following detailed description. It is also to be understood that the specific devices and processes illustrated in the attached drawings, and described in the following specification, are simply exemplary embodiments of the inventive concepts defined in the appended claims. Hence, specific dimensions and other physical characteristics relating to the embodiments disclosed are not to be considered as limiting, unless the claims expressly state otherwise.

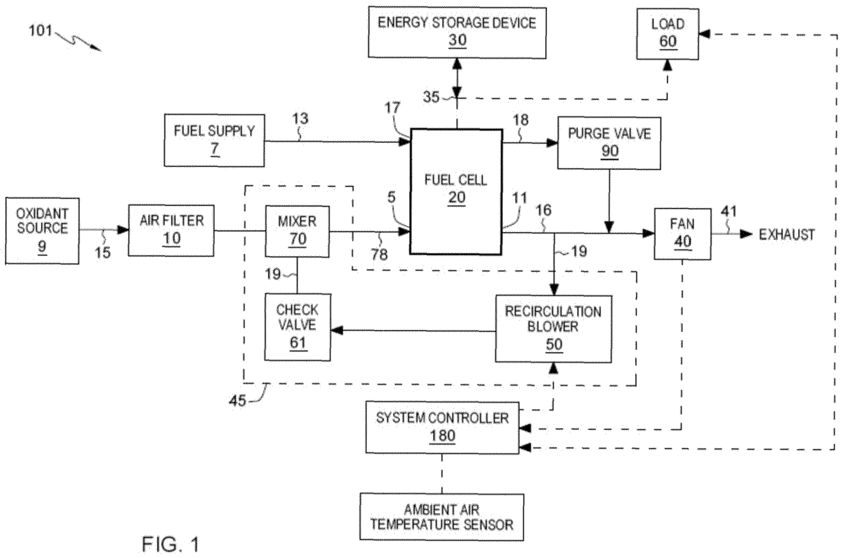

In accordance with principals of the present invention, fuel cell systems and methods for manufacturing a fuel cell stack are provided. In the example depicted in FIG. 1, a fuel cell system 101 is referred to as the assembled, or complete, system which functionally together with the parts thereof produces electricity for powering a load 60, and typically includes a fuel cell stack 20 and an energy storage device 30. The fuel cell is supplied with a fuel 13, for example, hydrogen, through a fuel inlet 17. Excess fuel 18 can be exhausted from the fuel cell through a purge valve 90 and can be diluted by a fan 40. In one example, fuel cell stack 20 can have an open cathode architecture of a PEM fuel cell, and combined oxidant and coolant, for example, air, may enter through an inlet air filter 10 coupled to an inlet 5 of fuel cell stack 20. Excess coolant/oxidant 16 and heat can be exhausted from a fuel cell cathode of fuel cell stack 20 through an outlet 11 to fan 40 which can exhaust the coolant/oxidant and/or excess fuel to a waste exhaust 41, such as the ambient atmosphere. In one embodiment, fuel cell system 101 can include a recirculation subassembly 45, including a recirculation blower 50 (controlled by a system controller 180), as well as a check valve 61 and a mixer 70 for controllably recirculating, at least in part, excess coolant/oxidant 16 to inlet 5 of fuel cell stack 20. The fuel and coolant/oxidant can be supplied by a fuel supply 7 and an oxidant source 9 (e.g., air), respectively, and other components of a balance of plant, which may include compressors, pumps, valves, fans, electrical connections and sensors.

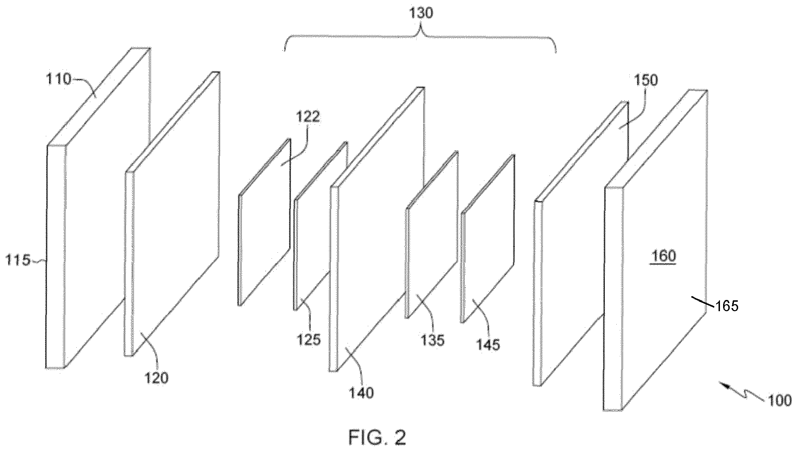

FIG. 2 depicts a schematic exploded view of an internal subassembly 100 of fuel cell stack 20 of FIG. 1 including a cathodic plate separator 110 at an outer end 115 and a plate separator seal 120 on an inner side thereof. A membrane electrode assembly (MEA) 130 is located between seal 120 and a second plate separator seal 150. An anode plate separator 160 is at a second end 165 of subassembly 100.

MEA 130 includes a membrane 140 (e.g., an ion conducting membrane) between a cathode side catalyst layer 125 and an anode side catalyst layer 135. A cathode side gas diffusion layer (GDL) 122 is located between cathode side catalyst layer 125 of the membrane electrode assembly and plate separator 110. An anode side gas diffusion layer 145 is located between anode side catalyst layer 135 of the membrane electrode assembly and plate separator 160. Seal 120 and seal 150 can be received in a channel on a respective inner side of plate separator 110 and plate separator 160, respectively. In another example, such seals can be injection molded around an MEA (e.g., MEA 130) or another fuel cell component.

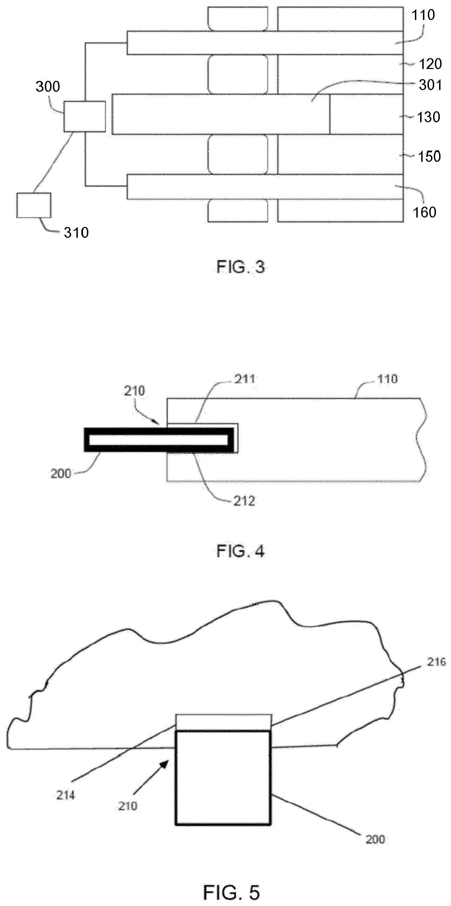

In an example depicted in FIG. 3, a voltage sensor 300 can be electrically connected to opposing bipolar plates, e.g., plate separator 110 and plate separator 160 of subassembly 100 of fuel cell stack 20. In one embodiment, sensor 300 can be configured to detect and/or measure a voltage potential between plate separator 110 and plate separator 160, between which plate separator seals 120, 150 sandwich the membrane electrode assembly (MEA) 130, which can reside within, or be encircled by, a sub-gasket 301 (in one embodiment).

A cell voltage monitoring pickup card or board can be used which includes multiple electrical and mechanical connectors to connect to various portions of a fuel cell stack (e.g., fuel cell stack 20). Such connectors between the board(s) and plates can allow an electrical connection between the plates and sensor 300, which can be connected to a data processor or controller 310 for measuring a voltage between the plates, for example.

In one or more embodiments, fuel cell plates (e.g., plate separator 110 and plate separator 160) can include slots for receiving electrical connectors to allow a measurement of a voltage or potential between the fuel cell plates in a fuel cell stack (e.g., fuel cell stack 20). FIGS. 4-5 depict one example where a connector 200 is being received in a receptacle 210 of plate separator 110 such that connector 200 makes an electrical connection with plate separator 110, as shown in block diagram form from a side and cross-sectional top view, respectively, in the figures. Similarly, plate separator 160 (FIG. 3) can have a receptacle (not shown) for receiving a second connector to allow voltage measurement between plate separator 110 and plate separator 160. Receptacle 210 can include vertical/horizontal receptacle bounding surfaces 211 and 212, and lateral recess bounding surfaces 214 and 216. The portions of the plate separators bounding the recesses, and thus the electrical connectors (e.g., connector 200), can be formed of, or otherwise include an electrically conductive material, such as copper, silver, stainless steel, nickel, or similar conductive material or alloy, which can be plated with an inert material, such as gold to prevent oxidation and corrosion.

Connector 200 can be formed of a stamped sheet metal (e.g., Copper, Nickel, Stainless Steel, Titanium, Monel, Inconel, or other alloys of such materials therein that are both conductive and inert whether through plating or passive formation of protection that does not impede electrical operation or solderability ). Electrical contact may be made between a connector (e.g., connector 200) and lateral and/or vertical bounding surfaces (e.g., lateral recess bounding surfaces 214, 216 and/or vertical recess bounding surfaces 211, 212) of such a receptacle to allow a voltage measurement as described above.

As noted, a cell voltage monitoring pickup card or board can include multiple wires connected to multiple fuel cell plates to allow an electrical connection between the plates and a scanner card or device. The scanner card can be connected to a data processor, controller, or other computing device for measuring a voltage between the plates, for example.

In one or more embodiments, a cell voltage monitoring pickup board or card can include a plurality of wire loops extending away from the printed circuit board, such that the loops can contact fuel cell plates so that the voltage between the plates may be monitored. When connected to a fuel cell plate in operation, a pickup board can be exposed to a high humidity environment, along with being subject to shocks and vibrations if the fuel cell itself is used in a mobile application. Depending on the implementation, the shocks and vibrations could cause a disconnection of the pickup board relative to a fuel cell plate, thereby interrupting any monitoring (e.g., of cell voltages) that may be underway. Thus, it is useful for any connection between a fuel cell plate and pickup board to be resistant to separation. It is further advantageous if such a pickup board can be easily connected to the fuel cell plate for easy setup of the voltage monitoring.

FIGS. 6A-6G depict a further embodiment of a connector, receptacle and electrical connector system, in accordance with one or more aspects of the present invention.

As illustrated in FIGS. 6A-6B, in one or more implementations, a fuel cell plate 601, such as fuel cell plates 110, 150, is provided with a receptacle 600 configured to facilitate electrical connection to the fuel cell plate. In one example, fuel cell plate 601 is a metallic bipolar plate. In the embodiment illustrated, receptacle 600 is a shaped-edge recess defined by one or more surfaces including, for instance, lower surface 602, an upper surface (not shown), and a side surface 603 of the recess. Further, in the embodiment illustrated, receptacle 600 has a tapered middle region 605, which facilitates securing of a connector 610 within receptacle 600 in operative position.

In one or more embodiments, connector 610 is sized and configured to facilitate electrically connecting a circuit board or pickup board (such as circuit board 630 of FIGS. 6D & 6E) to the fuel cell stack, which includes fuel cell plate 601. In one embodiment, connector 610 is elastically deformable to facilitate operative positioning the connector within receptacle 600, and facilitate an interference fit of the connector within receptacle 600 against one or more surfaces defining, at least in part, the receptacle, to secure connector 610 within receptacle 600, with connector 610 electrically connected to fuel cell plate 601 of the fuel cell stack. In one or more implementations, a connector (such as connector 610 formed as an elastically-deformable wire connector) and a receptacle (such as receptacle 600) have advantages over other connection approaches or types because they allow for the electrical and mechanical engagement to occur internal to the fuel cell plate envelope, which decreases the exposed portion of the cell voltage pickup connector(s). This also advantageously maintains the overall envelope of the fuel cell stack and cell voltage monitor assembly more compact, and limits the risk to self-shorting within the fuel cell system by eliminating or reducing external connector features.

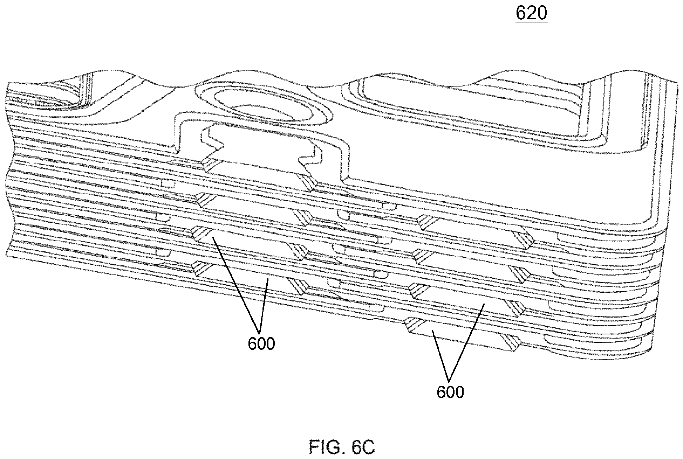

FIG. 6C depicts further details of one embodiment of a plurality of receptacles 600 formed within fuel cell plates 601 of a fuel cell stack 620. In one or more implementations, a fuel cell plate of the stack itself incorporates an edge recess or keyhole-type pocket feature, configured as receptacle 600, which includes, as noted, a tapered middle region as illustrated in FIGS. 6A-6C. The tapered middle region forms a narrowed section which opens to a wider section, and requires the elastically-deformable wire connector to deflect when being inserted, which provides a positive engagement of the connector to one or more internal surfaces defining receptacle 600, such as lower surface 602, the upper surface (not shown), and/or sidewall surface 603 of FIGS. 6A-6B. Note in this regard that additional engagement can be provided by incorporating a small, out-of-plane bend to the elastically-deformable wire connector. This is to make, in one or more embodiments, the connector (or pickup contact) taller than the height of the receptacle, thereby ensuring an interference fit with the lower surface and upper surface defining the receptacle.

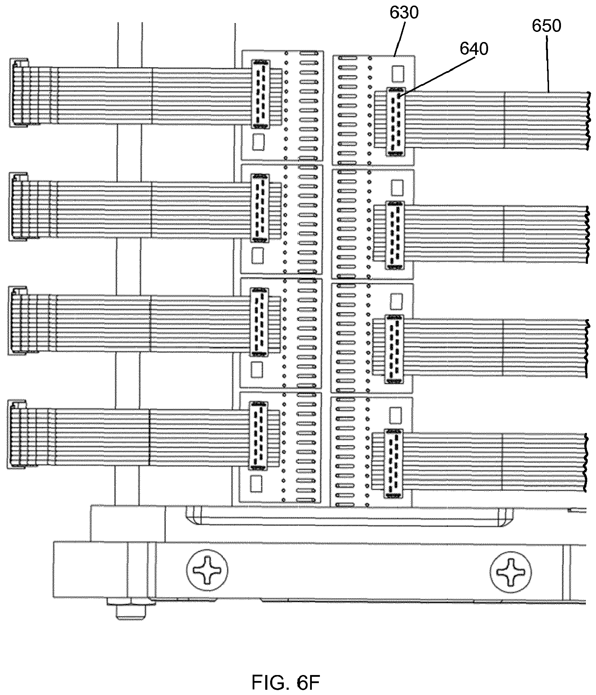

In one or more implementations, the wire connectors, or wire-formed contacts, can be formed of an electrically conductive material, such as noted above in connection with connector 200. In one specific example, connector 600 can be formed from BeCu wire. This wire material is commercially available, and can be plated as desired for a particular application. Advantageously, the wire connector allows for easy fabrication of connector designs via, for instance, computer numerical control (CNC) wire benders. The wire shape also allows for relatively easy integration with a circuit board, such as a printed circuit board, as illustrated in FIGS. 6D-6F. Integrating a connector to a printed circuit board allows the individual contacts to be routed and collected at a common place, where the voltages can be taken to a common connector header 640, disposed, for instance, on one side 631 of circuit board 630, for easy wiring using, for instance, flex cables 650 (FIG. 6F) over to a monitor device, such as a computer, other computing resource or data processor, electronic device, controller, etc.

As illustrated in FIGS. 6D-6E, in one or more embodiments, connector 610 is a U-shaped wire connector, with one end 612 of the U-shaped wire connector being electrically coupled to circuit board 630, and another end 613 of the U-shaped wire connector extending into and/or through a slot 635 in circuit board 630 to, for instance, facilitate operative positioning of the connector within receptacle 600 (FIGS. 6A-6C) by allowing the connector to more readily elastically deform or collapse with operative positioning of the connector within the receptacle. In this manner, ends 613 of U-shaped wire connectors 610 are free to slide within the respective slots 635, and thereby facilitate compression and operative positioning of the connector within the respective receptacles. FIG. 6D illustrates one example of ends 613 positioned closer to fixed ends 612, as they might reside (in one embodiment) when the connectors are operatively positioned within the respective receptacles. In FIG. 6E, a free-state position of ends 613 of connectors 610 is illustrated, such as when the connectors are withdrawn from the receptacles.

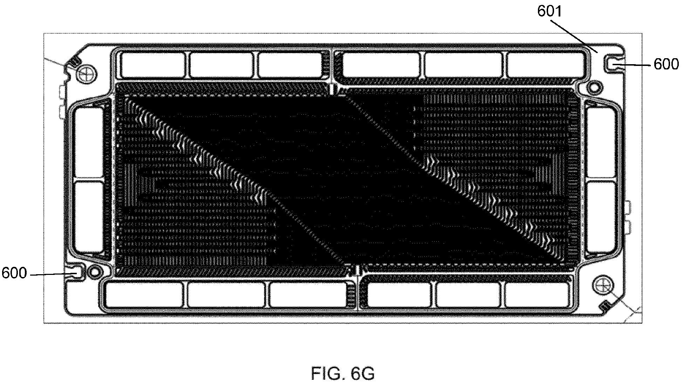

Note that in one or more embodiments, ends 612 of connectors 610 can each pass through or reside within a respective plated through-hole and can be, for instance, soldered to the plated through-hole to facilitate electrical connection of connector 610 to circuit board 630, and in particular to, for instance, one or more conductive trace lines residing on or within circuit board 630, to facilitate electrically connecting connectors 610 to connector header 640. Note also that, slots 635 can be sized and shaped as desired to facilitate movement of slidable ends 613 of connectors 610 during operative positioning of the connectors within the respective receptacles. As illustrated in FIG. 6C, an edge of fuel cell stack 620 can include multiple columns of receptacles 600 with, in one embodiment, the columns being offset and containing receptacles formed within every other fuel cell plate of the fuel cell stack. In this manner, each fuel cell plate can be contacted using a connector system, such as disclosed herein. As illustrated in FIG. 6G, in one or more other implementations, receptacles 600 can be disposed on separate edges or sides of fuel cell plates 601 within the fuel cell stack.

As noted, in one or more embodiments, the circuit board can physically and electrically couple to the connector pickups via soldered connections on one end of one of the legs, with the other ends being free to slide within, for instance, respective slots in the board. This allows the free end to transition as a connector is being operatively inserted into a receptacle to lessen the force required to deflect the connectors when installing them, thereby decreasing the overall insertion force required. In one or more embodiments, the fuel cell plates themselves can incorporate the receptacles or pocket features on both ends of the plate(s), as illustrated in FIG. 6G. As shown, the receptacles can be incorporated at different distances from the longer edges of the plates. In this manner, fuel cell stacks with two columns of receptacles can be constructed by rotating each plate 180 degrees from the previous. The result is that two columns of receptacle or pocket features are provided, which stagger from plate-to-plate, as shown in FIG. 6C. In one or more embodiments, only every other cell pair within the fuel cell stack is monitored, in which case, only one column of the receptacles need be provided and populated with connectors. In essence, in one embodiment, this means that when a circuit board pickup assembly is installed, it will engage connectors coupled to monitor voltage for cells 1, 3, 5, etc. Depending on the implementation, if it is desirable to measure every cell voltage (e.g., cell 1, 2, 3, 4, etc.), then the same pickup board assemblies can be employed, rotated 180 degrees, to achieve the two offset columns of receptacles. For wiring conventions, mirrored assemblies can be produced so that, for instance, position 1 is always at the lowest potential, but this could be physically flipped and used on the other columns of pockets, if desired.

In one or more embodiments, the cell voltage monitor (CVM) and cell voltage connector system designs disclosed herein can be used with metal fuel cell plates that have finer cell pitch (that is, shorter distances between cells) than prior fuel cell plate designs, such as prior graphite plate designs. To accomplish this, the connectors and associated circuit boards have finer pitches, as well. Further, in a graphite plate design, the fuel cell plates essentially bottomed-out against each other when the stack was compressed in the build process. The finer metal plates do not, and are also more flexible. Thus, the cell pitch is not as repeatable at this stage. Pickup boards, or circuit boards, are advantageously used in the connector system to facilitate mounting or locating multiple connectors to be placed in operative position within the respective receptacles. This allows for signals to be routed to a common connector header, eliminating the need for many individual wires along the edge or side of the fuel cell stack. Rather, the circuit board and connector head configurations disclosed allow the use of multiconductor cables, or flex cables. As noted, depending on the implementation, voltage at every fuel cell, or less than all the fuel cells, can be monitored using a connector system and method such as disclosed.

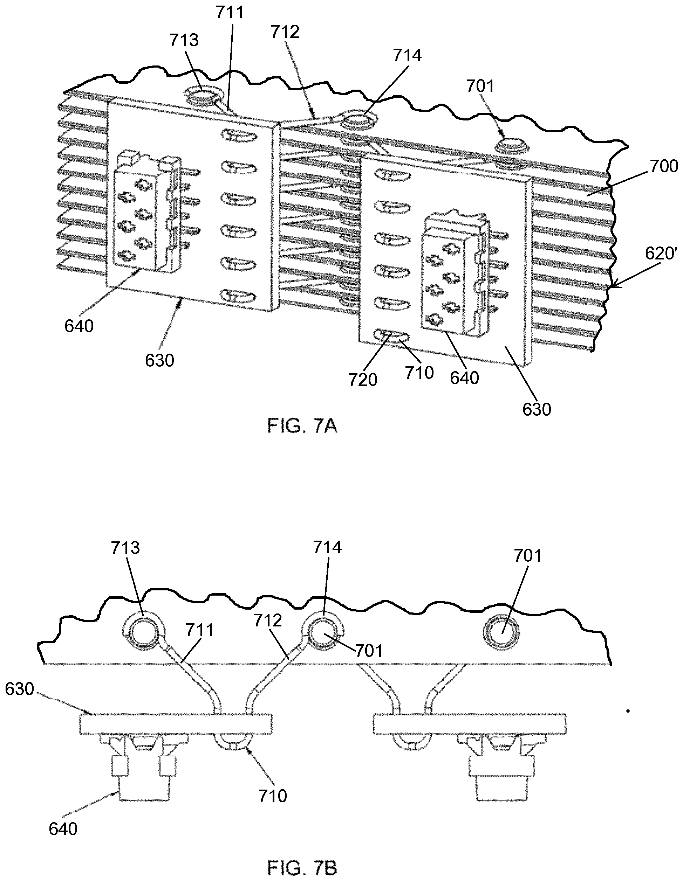

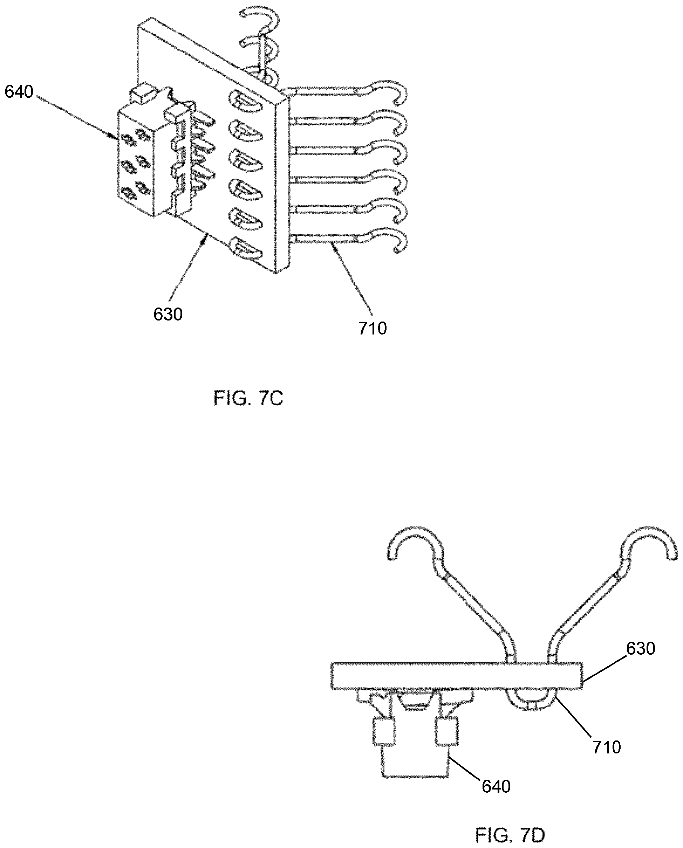

FIGS. 7A-7D depict another embodiment of a connector system for facilitating electrically connecting to a fuel cell stack, in accordance with one or more aspects of the present invention. Referring collectively to FIGS. 7A-7D, the connector system includes, in one or more implementations, receptacles or recesses 700 within the fuel cell stack 620', with the receptacles being configured to facilitate electrically connecting to the fuel cell stack via respective detent structures 701 formed as part of, or electrically connected to, the fuel cell plates of the fuel cell stack. In this implementation, rather than the receptacles being fully-formed pockets, receptacles 700 are defined as spaces or recesses into which the connectors (or pickup contacts) can be inserted. In the embodiment depicted, two connection arms 711, 712 extend outward from connector 710. The connection arms 711, 712 are elastically deformable or spring-biased to allow for deflection of the arms inward, to facilitate positioning of the arms about detent structures 701 within the respective receptacle 700. Once the arms are positioned in place, the arms are released and spring back outward to engage the detent structures formed in the respective fuel cell plate pair.

In the embodiment of FIGS. 7A-7D, connector 710 is a wire connector that is electrically and mechanically connected to circuit board 630 by, for instance, passing a portion thereof through a respective opening or slot in the circuit board, and soldering the connector to the circuit board for, for instance, electrical contact of the connector to a respective conductive trace line of the board. As illustrated, first arm 711 includes a first end 713 configured to engage a first detent structure 701 within receptacle 700 with operative positioning of the connector within the receptacle, and second arm 712 includes a second end 714 configured to engage a second detent structure 701 within receptacle 700 with operative positioning of connector 710 within receptacle 700. In the embodiment illustrated, and by way of example only, the first and second ends 713, 714 of first and second arms 711, 712, respectively, are each hook-shaped ends sized and shaped to at least partially loop around the respective detent structures 701 within receptacle 700 to facilitate electrically connecting connector 710 to detent structures 701 within receptacle 700, and thereby electrically connect connector 710 to the respective fuel cell plate(s) of the fuel cell stack 620'.

As with the embodiment of FIGS. 6A-6G, circuit board 630 includes one or more conductive trace lines residing on or within the circuit board to facilitate electrically connecting connector 710 to connector header 640. In this manner, individual connector contacts can be routed and collected at a common place, where the voltages can be taken to a common connector header 640 disposed, for instance, on one side of circuit board 630, for facilitating wiring using, for instance, one or more flex or ribbon cables for connection to a monitor device, such as a computer, computing resource, data processor, electronic device, controller, etc.

Note also that, in one or more implementations, connectors 710 are wire connectors, or wire-formed contacts, formed of an elastically-deformable, electrically conductive material, such as noted above with respect to connector 610 of FIGS. 6A-6G. In one specific example, connector 710 can be formed with a spring-biasing to facilitate outward pressing of arms 711, 712 with operative positioning of connector 710 within receptacle 700 about detent structure(s) 701. Note that the embodiment of FIGS. 7A-7D potentially consumes less space on the fuel cell plate itself, and is flexible with various iterations of different detent structures that can be used with the fuel cell plates and/or fuel cell stack. As in the embodiment discussed above with respect to FIGS. 6A-6G, in one implementation, the cell voltage monitor (CVM) can be configured to measure every other cell voltage. In the embodiment illustrated, connectors can be staggered into columns, as with the connection system embodiment of FIGS. 6A-6G, if every fuel cell plate is to be sampled.

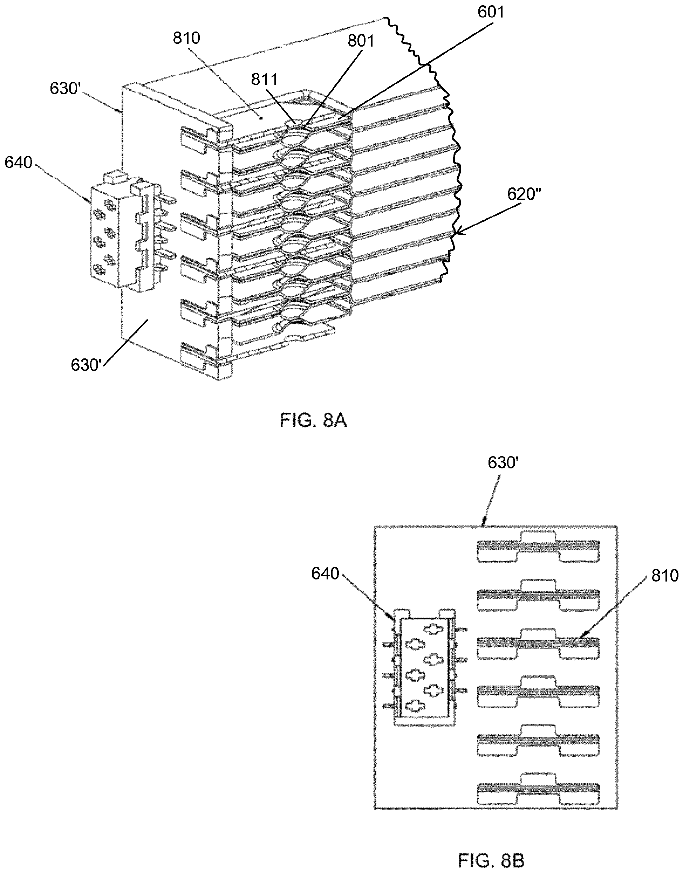

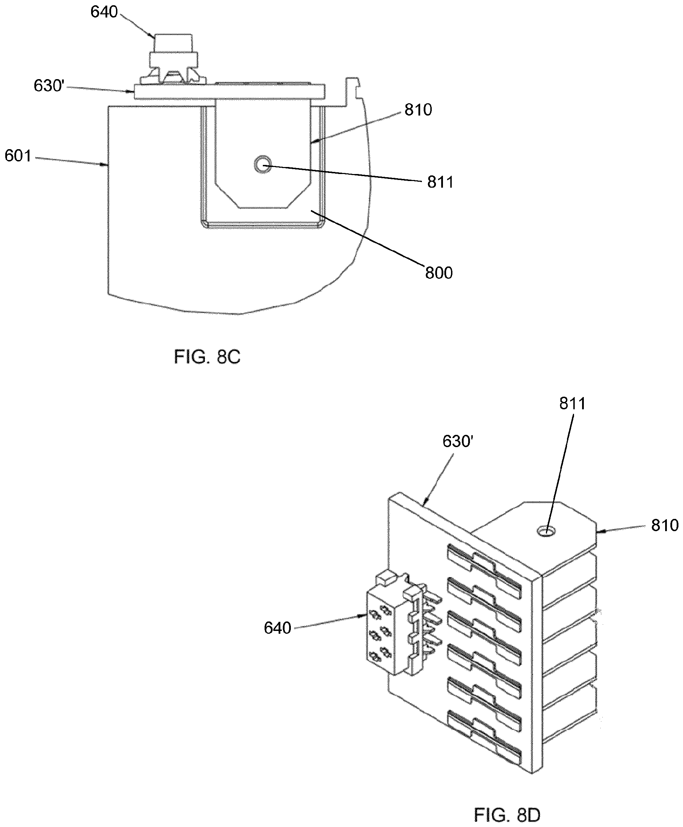

FIGS. 8A-8D depict another embodiment of a connector system for facilitating electrically connecting to a fuel cell stack, in accordance with one or more aspects of the present invention. Referring collectively to FIGS. 8A-8D, the connector system includes, in one or more implementations, recesses or receptacles 800 within the fuel cell stack 620", with the receptacles being configured to facilitate electrically connecting to the fuel cell stack via respective detent structures 801 (e.g., dimples) formed as part of, or electrically connected to, the fuel cell plates of the fuel cell stack (in one embodiment). In this implementation, receptacles 800 can be fully-formed pockets or recesses within the fuel cell stack into which the connectors (or pickup contacts) can be inserted. In the embodiment depicted, connectors 810 are electrically conductive plates or slabs with an opening 811 positioned and sized to receive a respective detent structure 801 within receptacle 800 with operative positioning of connector 810 within receptacle 800, and thereby facilitate an interference-fit of connector 810 within receptacle 800 to secure connector 810 within receptacle 800 electrically connected to the fuel cell plate 601 of the fuel cell stack 620".

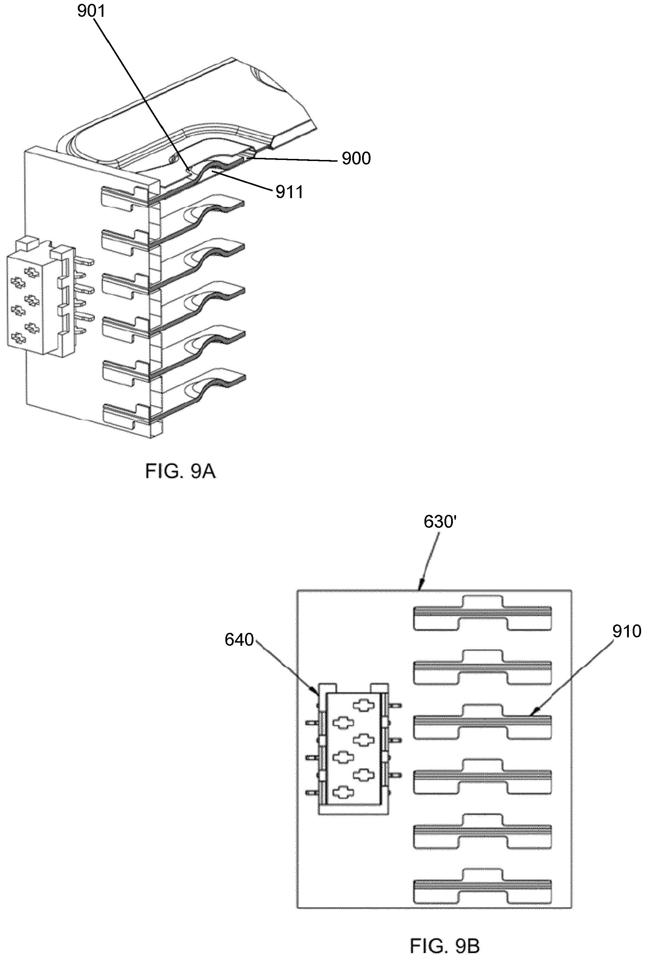

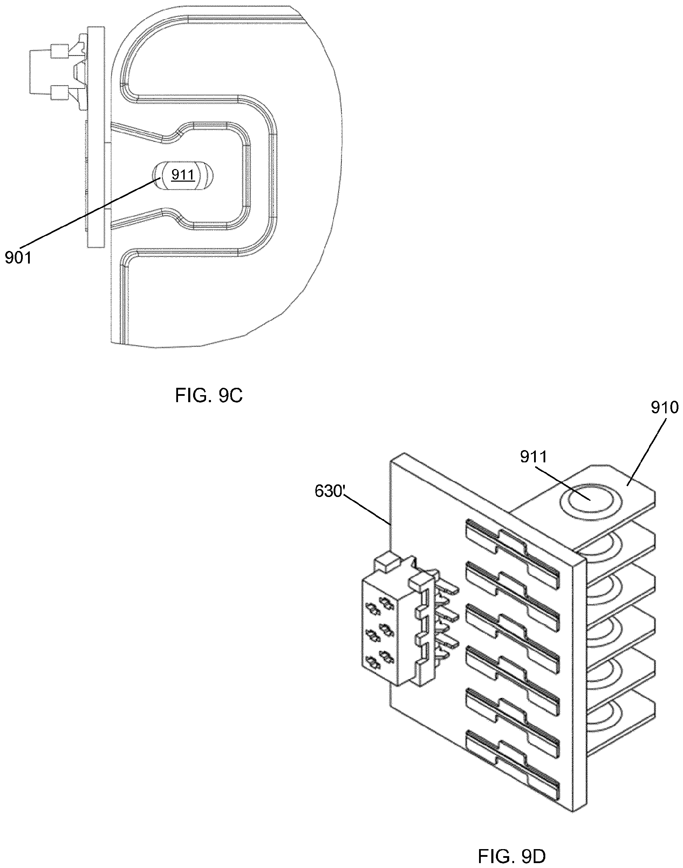

In the embodiment of FIGS. 8A-8D, connector 810 is a rectangular-shaped conductive pickup structure, such as a flat, spade-like contact, with an opening or slot configured to engage with the detent structure (or dimple) within the receptacle to facilitate providing proper location and engagement of features. Note that alternatively, the fuel cell plate can incorporate the opening or slot, and the pickup connector can incorporate the detent structure or dimple, as in the embodiment of FIGS. 9A-9D described below.

In one or more embodiments, connector 810 is bendable or elastically deformable to facilitate operative positioning of the connector within the receptacle, and to facilitate an interference-fit of the connector within the receptacle with the detent structure 801 residing, at least partially, within opening 811 to secure the connector within the receptacle, with the connector electrically connected to the fuel cell plate of the fuel cell stack.

Connector 810 is electrically and mechanically coupled to circuit board 630 by, for instance, passing a portion thereof through a respective opening or slot in the circuit board, and soldering the connector to the circuit board for, for instance, electrical contact of the connector to a respective conductive trace line of the board. In this manner, the circuit board 630 facilitates electrically connecting connector 810 to a connector header 640, such as described above in connection with FIGS. 6A-7D. Note also that, in this manner, individual connector contacts are routed to and collected at a common place, where the voltage can be taken to a common connector header 640 disposed, for instance, on one side of the circuit board, for facilitating wiring using, for instance, one or more flex or ribbon cables for connection to a monitor or control device, such as a computer, computing resource, data processor, electronic device, controller, etc.

Note also that, in one or more implementations, connectors 810 are electrically conductive plate-type connectors formed of an elastically-deformable, electrically conductive material, such as noted above with respect to the connectors of FIGS. 6A-7D. In one specific example, connector 810 can be sized and formed to allow flexing of the connector as it engages with respective detent structure(s) 801 within receptacle 800. Note that the embodiment of FIGS. 8A-8D utilize formed geometry (e.g., one or more detent structures, such as one or more dimples) on the fuel cell plate, in one or more embodiments, to facilitate establishing the electrical connection. As illustrated in FIG. 8A, the formed geometry or detent structures can align in a column when the anode and cathode plates are joined to form bipolar fuel cell plates of the fuel cell stack. This formed dimple approach can potentially require less area on the plate, which can be significant in facilitating increasing the active-to-inactive plate area ratio of the fuel cell stack.

FIGS. 9A-9D depict a further embodiment of a connector system for facilitating electrically connecting to a fuel cell stack, in accordance with one or more aspects of the present invention. The connector system of FIGS. 9A-9D is a variation on the connector system of FIGS. 8A-8D described above.

Referring collectively to FIGS. 9A-9D, the connector system includes, in one or more implementations, recesses or receptacles 900 within the fuel cell stack 620", with the receptacles being configured to facilitate electrically connecting to the fuel cell stack. In this implementation, receptacles 900 can be fully-formed pockets or recesses within the fuel cell stack into which the connectors (or pickup contacts) can be inserted. In the embodiment depicted, connectors 910 are electrically conductive plates or slabs with respective detent structures 911 positioned and sized to extend into, or reside within, an opening 901 in a surface of the respective receptacle 900 with operatively positioning of connector 910 within receptacle 900, and thereby facilitate an interference-fit of connector 910 within receptacle 900 to secure connector 910 within receptacle 900 electrically connected to the fuel cell plate 601 of the fuel cell stack 620".

In the embodiment of FIGS. 9A-9D, connector 910 is a substantially rectangular-shaped conductive pickup structure, such as a flat, spade-like contact, with a detent structure sized and located to engage with an opening or slot within a wall of the receptacle to facilitate providing proper locating and engagement of features with insertion of the connector into the receptacle.

In one or more embodiments, connector 910 is bendable or elastically deformable to facilitate operative positioning of the connector within the receptacle, and to facilitate an interference-fit of the connector within the receptacle with the detent structure 911 residing, at least partially, within opening 901 to secure the connector within the receptacle, with the connector electrically connected to the fuel cell plate of the fuel cell stack.

In one embodiment, connector 910 is electrically and mechanically coupled to circuit board 630 by, for instance, passing a portion thereof through a respective opening or slot in the circuit board, and soldering the connector to the circuit board for, for instance, electrical contact of the connector to a respective conductive trace line of the board. In this manner, circuit board 630 facilitates electrically connecting connector 910 to a connector header 640, such as described above in connection with FIGS. 6A-7D. Note also that, in this manner, individual connector contacts are routed to and collected at a common place, where the voltage can be taken to a common connector header 640 disposed, for instance, on one side of the circuit board, for facilitating wiring using, for instance, one or more flex or ribbon cables for connection to a monitor or control device, such as a computer, computing resource, data processor, electronic device, controller, etc.

Note also that, in one or more implementations, connectors 910 are electrically conductive plate-type connectors formed of an elastically-deformable, electrically conductive material, such as noted above with respect to the connectors of FIGS. 6A-8D. In one specific example, connector 910 can be sized and formed to allow flexing of the connector as it is operatively inserted within the receptacle 900 to engage with the respective wall opening 901 within receptacle 900. Note that the embodiment of FIGS. 9A-9D utilize formed geometry (e.g., one or more detent structures, such as one or more dimples) on the connectors to facilitate establishing the electrical connections. This is one example only of the detect structure that can be used. As illustrated in FIG. 9A, the formed geometry or detent structures can align in a column when the connectors are operatively positioned within the receptacles. This formed dimple approach can thus potentially require less area on the plate, which can be significant in facilitating increasing the active-to-inactive plate area ratio of the fuel cell stack.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprise" (and any form of comprise, such as "comprises" and "comprising"), "have" (and any form of have, such as "has" and "having"), "include" (and any form of include, such as "includes" and "including"), and "contain" (and any form contain, such as "contains" and "containing") are open-ended linking verbs. As a result, a method or device that "comprises", "has", "includes" or "contains" one or more steps or elements possesses those one or more steps or elements, but is not limited to possessing only those one or more steps or elements. Likewise, a step of a method or an element of a device that "comprises", "has", "includes" or "contains" one or more features possesses those one or more features, but is not limited to possessing only those one or more features. Furthermore, a device or structure that is configured in a certain way is configured in at least that way, but may also be configured in ways that are not listed.

The corresponding structures, materials, acts, and equivalents of all means or step plus function elements in the claims below, if any, are intended to include any structure, material, or act for performing the function in combination with other claimed elements as specifically claimed. The description of one or more embodiments has been presented for purposes of illustration and description but is not intended to be exhaustive or limited to in the form disclosed. Many modifications and variations will be apparent to those of ordinary skill in the art. The embodiment was chosen and described in order to best explain various aspects and the practical application, and to enable others of ordinary skill in the art to understand various embodiments with various modifications as are suited to the particular use contemplated.

## Claims

1. A connector system for facilitating electrically connecting to a fuel cell stack, the connector system comprising:
a receptacle within the fuel cell stack, the receptacle being configured to facilitate electrically connecting to the fuel cell stack;
a circuit board; and
a connector electrically connected to and extending from the circuit board, the connector being receivable within the receptacle for electrically connecting the circuit board to the fuel cell stack, the connector being elastically deformable to facilitate operative positioning of the connector within the receptacle, and to facilitate an interference fit of the connector within the receptacle against a surface defining, at least in part, the receptacle to secure the connector within the receptacle, with the connector electrically connected to a fuel cell plate of the fuel cell stack.

2. The connector system of claim 1, wherein the connector comprises a wire connector with a first end fixedly mounted to the circuit board and a second end movably constrained by the circuit board.

3. The connector system of claim 2, wherein the second end of the wire connector extends into and is slidable within a slot in the circuit board to facilitate operative positioning of the connector within the receptacle.

4. The connector system of claim 1, wherein the connector comprises a U-shaped wire connector, with at least one end of the U-shaped wire connector coupled to the circuit board, and the U-shaped wire connector having a narrowed neck region which facilitates retention of the connector within the receptacle, the receptacle having a tapered middle region, and the connector being elastically deformable for insertion into the receptacle with the interference fit being, at least in part, about the tapered middle region of the receptacle.

5. The connector system of claim 1, wherein the receptacle includes a recess in an edge of the fuel cell plate of the fuel cell stack, the recess being defined, at least in part, by a lower surface and an upper surface, and wherein the connector comprises a shaped-wire connector elastically deformable to facilitate operative positioning within the receptacle, and to facilitate forming, at least in part, an interference fit with the lower surface and the upper surface defining the recess in the edge of the fuel cell plate.

6. The connector system of claim 1, wherein the connector comprises a springloaded wire connector to facilitate operative positioning of the connector within the receptacle and facilitate the interference fit of the connector within the receptacle.

7. The connector system of claim 1, wherein the connector comprises a wire connector with a first arm and a second arm extending from the circuit board, the first arm including a first end configured to engage a first structure within the receptacle with operative positioning of the connector within the receptacle and the second arm including a second end configured to engage a second structure within the receptacle with operative positioning of the connector within the receptacle.

8. The connector system of claim 7, wherein the first end and the second end of the first and second arms, respectively, are each hook-shaped ends, and the hook-shaped ends of the first and second arms are sized and shaped to at least partially loop around the first and second structures within the receptacle, respectively, to facilitate electrically connecting the connector to the first and second structures within the receptacle, and thereby electrically connect the connector to the fuel cell plate of the fuel cell stack.

9. The connector system of claim 1, wherein the connector comprises an electrically conductive plate with an opening configured to receive a detent structure within the receptacle with operative positioning of the connector within the receptacle, and thereby facilitate the interference fit of the connector within the receptacle to secure the connector within the receptacle electrically connected to the fuel cell plate of the fuel cell stack.

10. The connector system of claim 1, wherein the connector comprises an electrically conductive plate with a detent structure configured to extend into an opening in the surface defining, at least in part, the receptacle with operative positioning of the connector within the receptacle, and thereby facilitate the interference fit of the connector within the receptacle to secure the connector within the receptacle electrically connected to the fuel cell plate of the fuel cell stack.

11. A method for electrically connecting to a fuel cell stack, the method comprising:
obtaining the fuel cell stack, the fuel cell stack having a receptacle at an edge of the fuel cell stack configured to facilitate electrically connecting to the fuel cell stack;
providing a circuit board with a connector electrically connected to and extending from the circuit board, the connector being receivable within the receptacle for electrically connecting the circuit board to the fuel cell stack, the connector being elastically deformable to facilitate operative positioning of the connector within the receptacle, and to facilitate an interference fit of the connector within the receptacle against a surface defining, at least in part, the receptacle; and
operatively positioning the connector within the receptacle by elastically deforming the connector with insertion of the connector into the receptacle, the elastically deforming facilitating interference fitting of the connector within the receptacle against the surface defining, at least in part, the receptacle to secure the connector within the receptacle, with the connector electrically connected to the fuel cell plate of the fuel cell stack.

12. The method of claim 11, wherein the connector comprises a wire connector with a first end fixedly mounted to the circuit board and a second end movably constrained by the circuit board, and wherein the operatively positioning comprises moving the second end of the wire connector relative to the circuit board to facilitate insertion of the connector into the receptacle.

13. The method of claim 12, wherein the second end of the wire connector extends into and is slidable within a slot in the circuit board to facilitate operative positioning of the connector within the receptacle.

14. The method of claim 11, wherein the connector comprises a U-shaped wire connector, with at least one end of the U-shaped wire connector coupled to the circuit board, and the U-shaped wire connector having a narrowed neck region which facilitates retention of the connector within the receptacle, the receptacle having a tapered middle region, and wherein the operatively positioning comprises elastically deforming the U-shaped connector with insertion of the connector into the receptacle to form the interference fit, at least in part, about the tapered middle region of the receptacle.

15. The method of claim 11, wherein the connector comprises a wire connector with a first arm and a second arm extending from the circuit board, the first arm including a first end configured to engage a first structure within the receptacle with operative positioning of the connector within the receptacle and the second arm including a second end configured to engage a second structure within the receptacle with operative positioning of the connector within the receptacle.

16. The method of claim 15, wherein the first end and the second end of the first and second arms, respectively, are each hook-shaped ends, and the hook-shaped ends of the first and second arms are sized and shaped to at least partially loop around the first and second structures within the receptacle, respectively, to facilitate electrically connecting the connector to the first and second structures within the receptacle, and thereby electrically connect the connector to the fuel cell plate of the fuel cell stack.

17. The method of claim 11, wherein the connector comprises an electrically conductive plate with an opening configured to receive a detent structure within the receptacle with operative positioning of the connector within the receptacle, and thereby facilitate the interference fit of the connector within the receptacle to secure the connector within the receptacle electrically connected to the fuel cell plate of the fuel cell stack.

18. The method of claim 11, wherein the connector comprises an electrically conductive plate with a detent structure configured to extend into an opening in the surface defining, at least in part, the receptacle with operative positioning of the connector within the receptacle, and thereby facilitate the interference fit of the connector within the receptacle to secure the connector within the receptacle electrically connected to the fuel cell plate of the fuel cell stack.

19. A fuel cell system comprising:
a fuel cell stack with a receptacle at an edge of the fuel cell stack, the receptacle being configured to facilitate electrically connecting to the fuel cell stack;
a circuit board; and
a connector electrically connected to and extending from the circuit board, the connector being operatively positioned within the receptacle and secured in operative position via an interference fit of the connector within the receptacle against a surface defining, at least in part, the receptacle, with the connector electrically connected to a fuel cell plate of the fuel cell stack.

20. The fuel cell system of claim 19, wherein the connector comprises a wire connector with a first end fixedly mounted to the circuit board and a second end movably constrained by the circuit board.
